# EUROPEAN PATENT SPECIFICATION

(11) **EP 1 557 245 B1**
(45) Date of publication and mention of the grant of the patent: **22.08.2007**
(21) Application number: 04257958.1
(22) Date of filing: 20.12.2004
(51) Int. Cl.: B25J 19/00, B25J 21/00

(54) **Isolator system with a robot in a sterile work chamber**
Isoliersystem mit einem Roboter in einem sterilen Arbeitsraum
Système isolant avec un robot dans une chambre de travail stérile

(30) Priority: 26.01.2004 JP 2004017482
(43) Date of publication of application: 27.07.2005
(73) Proprietor: SHIBUYA KOGYO CO., LTD, Kanazawa-Shi Ishikawa-Ken (JP); FANUC LTD, Minamitsuru-gun, Yamanashi 401-0597 (JP)
(72) Inventor: Yoneda, Kenji, Shibuya Kogyo Co., Ltd., Kanazawa-shi Ishikawa-Ken (JP); Oshima, Yasusuke, Shibuya Kogyo Co., Ltd., Kanazawa-shi Ishikawa-Ken (JP); Nihei, Ryo, Fanuc Ltd., Minamitsuru-gun Yamanashi Pref. 401-0597 (JP)
(74) Representative: Naylor, Matthew John

(56) References cited:
- EP-A- 0 447 881
- PATENT ABSTRACTS OF JAPAN vol. 1997, no. 08, 29 August 1997 (1997-08-29) -& JP 09 094791 A (ZETETSUKU KK), 8 April 1997 (1997-04-08)

## Description

### BACKGROUND OF THE INVENTION

### Field of the Invention

The present invention relates to an isolator system and, more particularly, to an isolator system in which a sterilizing gas is supplied to the interior of a sterile work chamber to perform sterilization.

### Description of the Prior Art

A sterile work chamber is known in which a biological test, an operation for packing a drug or a drug solution or the like in an airtight case is performed. In such a sterile work chamber, the interior of the chamber is sterilized before and after an operation.

As a method for the above-described sterilization, a method of filling the interior of the sterile work chamber with a corrosive sterilizing gas such as hydrogen peroxide vapor is known. However, there is a problem that in a case where a robot for performing various operations is placed in the sterile work chamber, the sterilizing gas enters an inner section of the robot through a gap between sliding portions in a joint or a rotary assembly to corrode a wiring shield for motor or the like provided in the robot.

A technique is known which prevents such a corrosive atmosphere from entering an inner section of a robot placed in the corrosive atmosphere in such a manner that a jacket is attached to the robot to cover the outer surface of the robot, the interior of the robot is pressurized to a positive pressure, and a negative pressure is produced between the robot outer surface and the jacket (patent document 1: Japanese Patent No. 3030392).

In the arrangement in patent document 1, however, attachment of a jacket with which the outer surface of the robot is covered is required and there is a possibility of the operation of the robot being limited depending on the kind of the robot. Also, if it is attached as desired, attachment and detachment operations are required and the cost of the system is increased because the jacket is attached.

### Summary of the Invention

In view of the above-described problems, a preferred object of the present invention is to provide an isolator system in which when a sterile work chamber in which a robot is placed is sterilized with sterilizing gas, corrosion of an inner portion of the robot by the sterilizing gas is prevented without covering the outer surface of the robot.

According to the present invention, there is provided an isolator system having a sterile work chamber in which a sterile condition is maintained, a robot which is placed in the sterile work chamber, and which has an operating arm for performing various operations, and a sterilizing gas supply unit which supplies a sterilizing gas to the interior of the sterile work chamber, the isolator system including a gas supply unit which supplies a gas from the outside of the sterile work chamber to the interior of the robot, the gas supply unit having a top end opening opened inside the operating arm at the top end side, and a base portion opening opened inside the robot at the base portion side, wherein when the sterile work chamber is sterilized with the sterilizing gas, the gas from the gas supply unit is supplied to the interior of the robot through one of the top end opening and the base portion opening, and the gas circulated through the interior of the robot is discharged to the outside of the robot through the other opening, and wherein the pressure inside the robot is reduced relative to the pressure inside the sterile work chamber to which the sterilizing gas is supplied from the sterilizing gas supply unit.

### Brief Description of the Drawings

FIG. 1 is side view of the construction of an embodiment of the present invention; and
FIG. 2 is cross-sectional view of the top end portion of an operating arm of a robot.

### Detailed Description of the Embodiments

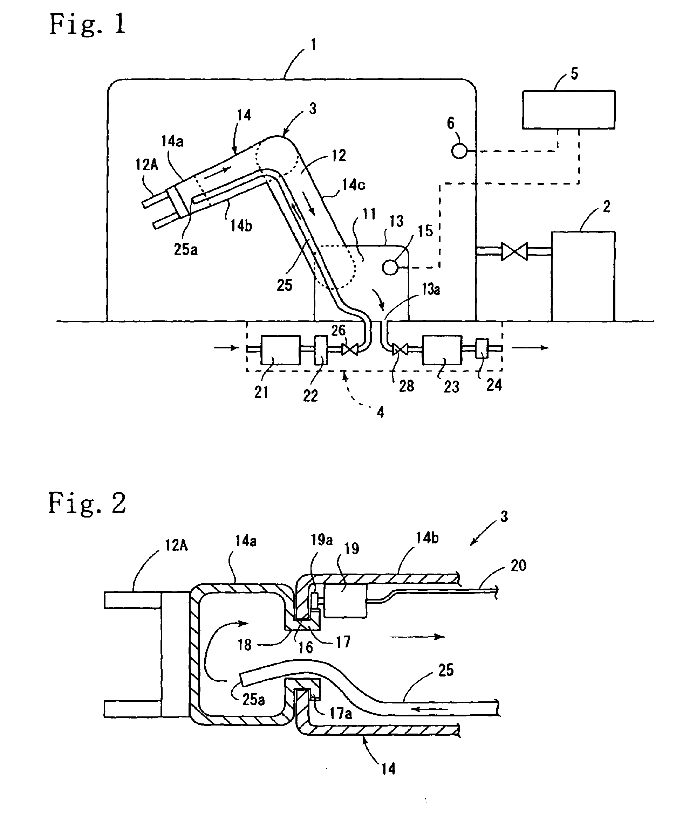

An embodiment of the present invention will be described with reference to the accompanying drawings. In FIG. 1 are illustrated an isolator 1 which is constructed as a sterile work chamber and in which a sterile condition is maintained, a sterilizing gas supply unit 2 which supplies a sterilizing gas to the interior of the isolator 1, a robot 3 which is placed in the isolator 1 and which performs predetermined operations, and a gas supply unit 4 which supplies a gas to the interior of the robot 3. These components are controlled by a control device 5.

When the robot 3 is operating, a sterile air is supplied from a sterile air supply unit (not shown) into the isolator 1 to maintain a predetermined positive pressure inside the isolator 1. Inflow of outside air is thereby prevented to maintain a sterile condition in the isolator 1.

A pressure sensor 6 for measuring the pressure in the isolator 1 is provided in the isolator 1. Data from the pressure sensor 6 is transmitted to the control device 5.

The sterilizing gas supply unit 2 fills the isolator 1 with a sterilizing gas such as hydrogen peroxide vapor to sterilize the interior of the isolator 1. The sterilizing gas supply unit 2 is operated before a start of an operation in the isolator or after the completion of the operation to sterilize the interior of the isolator 1 and the outside surface of the robot 3.

The robot 3 is a well-known industrial robot having a base portion 11 placed in the isolator 1 and an operating arm 12 for actually performing conveyance of objects, etc. The base portion 11 and the operating arm 12 are connected so as to be rotatable relative to each other.

The base portion 11 and the operating arm 12 are respectively constituted by hollow casings 13 and 14 each accommodating internal components such as motors and wiring (not shown). As materials forming the outer surfaces of the casings 13 and 14, materials not corrodible by the above-mentioned sterilizing gas are used.

A pressure sensor 15 for measuring the pressure inside the robot 3 is provided in the base portion 11. Data from the pressure sensor 15 is transmitted to the control device 5.

The casing 14 constituting the operating arm 12 is formed of three casings 14a, 14b, and 14c rotatably connected one to another. A hand portion 12A capable of opening and closing operations is attached to the casing 14a at the top end, while the casing 14c at the base portion 11 is rotatably connected to the casing 13 constituting the base portion 11.

Referring to FIG. 2, a circular through hole 16 is formed in a top end portion of the casing 14b, and a neck 17 generally U-shaped in section is fitted in the through hole 16. A communicating opening 18 is formed at a center of the neck 17 to enable communication of air between the casing 14a and the casing 14b.

A portion of the neck 17 of the casing 14a projecting on the casing 14b side is formed as a gear 17a meshing with a gear 19a of a motor 19 provided in the casing 14b. The casing 14a can be rotated relative to the casing 14b by rotating the motor 19 in the normal or reverse direction.

This construction is not limited to the portions for rotation between the casings 14a and 14b and is common to a joint between the casing 14b and the casing 14c in the operating arm 12, and a joint between the casing 14c and the casing 13 of the base portion 11. The interior of the robot 3 from the top casing 14a to the casing 13 of the base portion 11 are connected so as to enable continuous communication of air therethrough by the communicating opening 18.

Wiring 20 is connected to the above-described motor 19. Wiring 20 extends to the base portion 11 via the interiors of the above-described casings 14b and 14c.

The gas supply unit 4 is provided outside the isolator 1. The gas supply unit 4 has a gas feed device 21 which feeds a gas by taking in outside air, a sterile filter 22 which sterilizes the fed gas, a drawing device 23 which draws in air in the robot 3, and a catalyst 24 for cleaning up the gas containing a hydrogen peroxide component before discharging the gas to the outside.

A vent tube 25, which is a flexible tube, is connected to the sterile filter 22 through a first electromagnetic valve 26. The vent tube 25 extends through the casings 14b and 14c of the operating arm 12 and is laid in the interior of the casing 14a. The gas from the gas feed device 21 is jetted out of a top end opening 25a of the vent tube 25 in the casing 14a.

The above-mentioned drawing device 23 is connected to a base portion opening 13a formed in the casing 13 of the base portion 11 through a second electromagnetic valve 28. The gas is jetted from the top end opening 25a and is drawn in through the base portion opening 13a to cause a gas flow inside the robot 3 from the casing 14a of the operating arm 12 at the top end to the base portion 11 at the other end.

The concentration of the sterilizing gas entering the operating arm 12 through the rotating portions and the joint portions of the operating arm 12 is thereby reduced to a non-corrosive level by the gas fed by the gas feed device 21. The sterilizing gas is thus discharged to the outside through the operating arm 12.

The operations of the gas feed device 21 and the drawing device 23 are controlled by the control device 5 so that the gas feed rate and the drawing rate are substantially equal to each other, and so that the pressure inside the robot 3 is not increased to an excessively high level or reduced to an excessively low level. The rate of feed of the gas into the robot 3 is controlled so as to be maintained at a predetermined value such that the corrosion effect of the sterilizing gas is sufficiently reduced.

In the thus-arranged isolator system, sterilization in the isolator 1 is performed as described below.

The sterilizing gas is supplied from the sterilizing gas supply unit 2 to the interior of the isolator 1. Simultaneously, the above-described gas supply unit 4 is operated, as described below. The first electromagnetic valve 26 is opened to feed a gas through the vent tube 25 from the gas feed device 21, thereby supplying the gas to the interior of the casing 14a at the top side of the operating arm 12. The gas in the base portion 11 is discharged by being drawn out through the base portion opening 13a by the drawing device 23.

The air jetted into the casing 14a is thereby caused to flow into the casing 14b, pass through the casing 14c and flows into the casing 13 of the base portion 11.

While the air is flowing, the pressure inside the isolator 1 and the pressure inside the robot 3 are monitored by the control device 5 with the pressure sensors 6 and 15, and the rate at which the gas is fed by the gas feed device 21, the rate at which the gas is drawn by the drawing device 23 and the balance between these rates are controlled when necessary so that the pressure inside the robot 3 is lower than the pressure inside the isolator 1.

More specifically, a sterilizing gas comprising hydrogen peroxide vapor is supplied by the sterilizing gas supply unit 2 to the interior of the isolator 1 and the pressure inside the isolator 1 is maintained at a positive value higher by 40 to 100 Pa than the external pressure (atmospheric pressure), while the pressure inside the robot 3 is adjusted to atmospheric pressure value substantially equal to the atmospheric pressure outside the isolator 1.

If the pressure in the environment around the robot 3 is increased by about 30 Pa relative to the pressure inside the robot 3 as described above, air outside the robot 3 starts entering the robot 3 through the gaps between the sliding portions in the joint and rotating portions of the operating arm 12 to cause the sterilizing gas to permeate into the robot 3. These portions are sterilized if a pressure difference higher than that mentioned above is maintained.

When the robot 3 is operating, the pressure inside the robot 3 is also maintained lower than the pressure inside the isolator 1 to prevent particles or the like generated at the sliding portions from being scattered in the isolator 1.

While the gas feed device 21 and the drawing device 23 are provided in this embodiment, one of them may be removed depending on the internal capacity of the robot 3 for example, if the pressure inside the robot 3 can be maintained lower than the pressure inside the isolator 1.

In such case, where only the feed device 21 is provided, the gas is fed into the robot 3 through one of the two openings and is caused to flow out into the external atmosphere through the other opening via the catalyst 24.

On the other hand, where only the drawing device 23 is provided, the gas is drawn and discharged to the outside of the robot 3 through one of the openings and air in the external atmosphere is caused to flow into the robot 3 through the other opening via the sterile filter 22.

In the above-described embodiment, the gas is caused to flow from the casing 14a at the top side of the operating arm 12 toward the casing 13 of the base portion 11 at the other end. Alternatively, the air may be caused to flow in the reverse direction.

That is, if the gas feed device 21 and the sterile filter 22 are connected to the base portion opening 13a, and if the drawing device 23 is connected to the vent tube 25, an air flow can be caused in the direction opposite to that in the above-described embodiment, and the same effect as that in the above-described embodiment can be achieved.

Further, while the above-described vent tube 25 extends from the casing 14a of the operating arm 12 through the interior of the robot 3 in FIGS. 1 and 2, the arrangement may alternatively be such that the vent tube 25 is made of a material not corrodible by the sterilizing gas, is inserted into the robot 3 from the outside of the same, and communicates with the interior of the casing 14a through its top end opening 25a.

The present invention also encompasses methods of operation of an isolator system and uses of an isolator system as herein described.

## Claims

1. An isolator system having a sterile work chamber (1) in which a sterile condition is maintained, a robot (3) which is placed in the sterile work chamber, and which has an operating arm (12) for performing various operations, and a sterilizing gas supply unit (2) which supplies a sterilizing gas to the interior of the sterile work chamber, said isolator system comprising:
a gas supply unit (4) which supplies a gas from the outside of the sterile work chamber to the interior of the robot (3), said gas supply unit (4) having a top end opening (25a) opened inside the operating arm (12) at the top end side, and a base portion opening (13a) opened inside the robot at the base portion side (11),
wherein when the sterile work chamber (1) is sterilized with the sterilizing gas, the gas from the gas supply unit (4) is supplied to the interior of the robot (3) through one of the top end opening (25a) and the base portion opening (13a), and the gas circulated through the interior of the robot is discharged to the outside of the robot through the other opening, and
wherein the pressure inside the robot (3) is reduced relative to the pressure inside the sterile work chamber (1) to which the sterilizing gas is supplied from the sterilizing gas supply unit.

2. The isolator system according to claim 1, wherein said gas supply unit (4) has a gas feed device (21) which feeds the gas, and supplies the gas to the interior of the robot through one of the openings (13a, 25a).

3. The isolator system according to claim 1, wherein said gas supply unit (4) has a drawing device (23) which draws and discharges the gas to the outside of the robot through one of the openings (13a, 25a), the gas being supplied to the interior of the robot through the other opening.

## Patentansprüche

1. Isoliersystem mit einer sterilen Arbeitskammer (1), in der sterile Bedingungen aufrechterhalten werden, einem Roboter (3), der in der sterilen Arbeitskammer angeordnet ist und der einen Betätigungsarm (12) zur Ausführung von verschiedenen Arbeitsschritten aufweist und einer Sterilisationsgaszufuhreinheit (2), die ein Sterilisationsgas in das Innere der sterilen Arbeitskammer einleitet, wobei das Isoliersystem Folgendes umfasst:
eine Gaszufuhreinheit (4), die ein Gas von der Außenseite der sterilen Arbeitskammer in das Innere des Roboters (3) einleitet, welche Gaszufuhreinheit (4) eine Öffnung am oberen Ende (25a), die sich im Inneren des Betätigungsarms (12) an der oberen Endseite öffnet, und eine Basisabschnitt-Öffnung (13a) aufweist, die sich im Inneren des Roboters an der Basisabschnittseite (11) öffnet,
worin das Gas bei Sterilisation der sterilen Arbeitskammer (1) mit Sterilisationsgas von der Gaszufuhreinheit (4) durch die Öffnung am oberen Ende (25a) oder die Basisabschnitt-Öffnung (13a) in das Innere des Roboters (3) zugeführt wird, und wobei das durch das Innere des Roboters zirkulierte Gas dann durch die andere Öffnung an die Außenseite des Roboters abgegeben wird, und
worin der Druck im Inneren des Roboters (3) bezogen auf den Druck im Inneren der sterilen Arbeitskammer (1), der das Sterilisationsgas von der Sterilisationsgaszufuhreinheit zugeführt wird, reduziert ist.

2. Isoliersystem nach Anspruch 1, worin die Gaszufuhreinheit (4) eine Gaszufuhrvorrichtung (21) aufweist, die Gas zuführt und das Gas durch eine der Öffnungen (13a, 25a) in das Innere des Roboters einleitet.

3. Isoliersystem nach Anspruch 1, worin die Gaszufuhreinheit (4) eine Saugvorrichtung (23) aufweist, die das Gas durch eine der Öffnungen (13a, 25a) an die Außenseite des Roboters saugt und abgibt, wobei das Gas durch die andere Öffnung in das Innere des Roboters zugeführt wird.

## Revendications

1. Système isolant comportant une chambre de travail stérile (1) dans laquelle un état stérile est maintenu, un robot (3) qui est placé dans la chambre de travail stérile, et qui possède un bras d'actionnement (12) pour exécuter diverses opérations, et une unité (2) fournissant du gaz de stérilisation qui fournit un gaz de stérilisation à l'intérieur de la chambre de travail stérile, ledit système isolant comprenant :
une unité de fourniture de gaz (4) qui fournit un gaz de l'extérieur de la chambre de travail stérile à l'intérieur du robot (3), ladite unité de fourniture de gaz (4) ayant une ouverture d'extrémité supérieure (25a) ouverte à l'intérieur du bras d'actionnement (12) au côté de l'extrémité supérieure, et une ouverture de portion de base (13a) ouverte à l'intérieur du robot au côté (11) de la portion de base,
où lorsque la chambre de travail stérile (1) est stérilisée avec le gaz de stérilisation, le gaz de l'unité de fourniture de gaz (4) est fourni à l'intérieur du robot (3) à travers l'une parmi l'ouverture (25a) à l'extrémité supérieure et l'ouverture (13a) à la portion de base, et le gaz circulant à travers l'intérieur du robot est évacué vers l'extérieur du robot à travers l'autre ouverture, et
où la pression à l'intérieur du robot (3) est réduite relativement à la pression à l'intérieur de la chambre de travail stérile (1) à laquelle le gaz de stérilisation est fourni par l'unité de fourniture de gaz de stérilisation.

2. Système isolant selon la revendication 1, où ladite unité de fourniture de gaz (4) possède un dispositif d'amenée de gaz (21) qui amène le gaz et qui fournit le gaz à l'intérieur du robot à travers l'une des ouvertures (13a, 25a).

3. Système isolant selon la revendication 1, où ladite unité de fourniture de gaz (4) possède un dispositif d'aspiration (23) qui aspire et évacue le gaz vers l'extérieur du robot à travers l'une des ouvertures (13a, 25a), le gaz étant fourni à l'intérieur du robot à travers l'autre ouverture.
